# EUROPÄISCHE PATENTSCHRIFT

(11) **EP 4 270 055 B1**
(45) Veröffentlichungstag und Bekanntmachung des Hinweises auf die Patenterteilung: **22.07.2026**
(21) Anmeldenummer: 23167760.0
(22) Anmeldetag: 13.04.2023
(51) Int. Cl.: G01S 13/76, G01S 13/88, B60R 21/015, G01S 13/46

(54) **KRAFTFAHRZEUG, VERFAHREN EINES KRAFTFAHRZEUGS UND KOMMUNIKATIONSSYSTEM FÜR EIN KRAFTFAHRZEUG**
MOTOR VEHICLE, METHOD OF A MOTOR VEHICLE AND COMMUNICATION SYSTEM FOR A MOTOR VEHICLE
VÉHICULE AUTOMOBILE, PROCÉDÉ D'UN VÉHICULE AUTOMOBILE ET SYSTÈME DE COMMUNICATION POUR UN VÉHICULE AUTOMOBILE

(30) Priorität: 29.04.2022 DE 102022204235
(43) Veröffentlichungstag der Anmeldung: 01.11.2023
(73) Patentinhaber: VOLKSWAGEN AG, 38440 Wolfsburg (DE)
(72) Erfinder: Ette, Bernd, 38442 Wolfsburg (DE)

(56) Entgegenhaltungen:
- DE-A1- 102016 212 447
- US-A1- 2020 309 932
- US-A1- 2022 063 647

## Beschreibung

Die Erfindung betrifft ein Kraftfahrzeug mit einem UWB-System, welches dafür eingerichtet ist, ein auf Channel Impulse Response(CIR)-Messungen basierendes Verfahren durchzuführen und eine automatische Verstellung einer Fensterscheibe und/oder eines Schiebedachs durch einen Aktuator des Kraftfahrzeugs basierend auf einem Ergebnis der CIR-Messungen zu unterbrechen. Darüber hinaus betrifft die Erfindung ein Verfahren eines Kraftfahrzeugs sowie ein Kommunikationssystem für ein Kraftfahrzeug.

Moderne Fahrzeuge weisen eine Vielzahl von elektronischen Systemen auf, die einem Nutzer des Fahrzeugs bei verschiedenen Fahrzeugfunktionen assistierend zur Seite stehen. Ein Beispiel sind elektrische Fensterheber. Anstatt das Fenster aufwändig mittels mechanischer Kurbel auf und ab bewegen zu müssen, bedient der Nutzer bei elektrischen Fensterhebern einfach einen zugehörigen Kippschalter oder eine Taste, um das Fenster hoch oder herunter zu fahren. Regelmäßig werden elektrische Fensterheber verbaut, die mit einer sogenannten Antippautomatik ausgerüstet sind, wonach sich die Fensterscheibe durch eine kurzzeitige einmalige Betätigung des Kippschalters automatisch vollständig öffnen oder schließen lässt.

Da elektrische Fensterheber die Fensterscheiben üblicherweise mit Schließkräften von bis zu 300 Newton bewegen - dies entspricht bei einer Fensterscheibe mit einer Stärke von 8 mm einem Gewicht von bis zu 30 kg -, können elektrische Fensterheber ohne Einklemmschutz insbesondere für Kinder eine Gefahr darstellen. Beispielsweise können Situationen auftreten, in denen ein Kind seine Hand oder seinen Kopf zwischen der sich schließenden Fensterscheibe und der Fahrzeugtür einklemmt, weil es unbeabsichtigt den Kippschalter des elektrischen Fensterhebers umlegt. Viele elektrische Fensterheber sind daher heutzutage mit einem Einklemmschutz ausgestattet, der ein Einklemmen erkennen und den weiteren Schließvorgang der Fensterscheibe unterbrechen oder gar umkehren soll.

Bekannte Lösungen sehen hierzu vor, dass eine zur Bewegungsrichtung auftretende Gegenkraft des sich schließenden Fensters erfasst und basierend darauf ein Einklemmen identifiziert wird. Nach einem identifizierten Einklemmen wird eine Bewegungsumkehr des Aktuators eingeleitet, um die Fensterscheibe wieder zu öffnen.

Lösungen, die eine auftretende Gegenkraft als Maß zur Identifizierung eines Einklemmfalls zugrunde legen, sind heutzutage mit geringen Kosten realisierbar. Bedingt durch zum Beispiel immer konvexere Formen der in Fahrzeugen verbauten Fensterscheiben gelangen die bekannten Lösungen aus physikalischen Gründen teilweise an ihre Grenzen, so dass Einklemmfälle auftreten können, die nicht von dem Einklemmschutz erfasst werden.

Das Dokument DE 10 2020 124 444 A1 betrifft ein Verfahren zum Überwachen eines Innenraums und/oder eines Außenraums eines Kraftfahrzeugs. Vor dem Hintergrund der in Fahrzeugen verbauten Vielzahl von zur Erfüllung einzelner Aufgaben konzipierten und voneinander getrennten Systemen lehrt D1 eine verbesserte Lösung zum Überwachen eines Innenraums und/oder Außenbereichs eines Kraftfahrzeugs, welches keine oder nur wenige zusätzliche Komponenten benötigt.

Das Dokument DE 10 2018 206 571 A1 betrifft ein Sensormodul eines Verstellteils eines Kraftfahrzeugs. Hierbei wird auf die Problematik hingewiesen, die dann auftritt, wenn sich ein Hindernis in dem Verstellbereich einer Heckklappe befindet. Um eine Beschädigung des Verstellteils und/oder des Hindernisses durch die Schwenkbewegung des Verstellteils zu verhindern, sind gemäß dieser Offenbarung optische und kapazitive Sensoren bekannt. Vor diesem Hintergrund wird eine Lösung vorgeschlagen, die ein besonders geeignetes Sensormodul eines Verstellteils eines Kraftfahrzeugs mit gegenüber den bekannten optischen und kapazitiven Sensoren reduzierten Herstellungskosten und/oder einer reduzierten Montagezeit betrifft.

Das nachveröffentlichte Dokument US 2022/0163655 A1 bezieht sich allgemein auf die Erkennung von sich bewegenden Objekten, die auf einen Mittelwert der Größen einer Summe von Sammlungen von reflektierten vorbestimmten Mustern und einem vorbestimmten Schwellenwert reagieren.

Das Dokument DE 10 2016 212 447 A1 offenbart eine Einklemmschutzeinrichtung für eine zu überwachende Seitentür eines Kraftfahrzeugs, die um ein Gelenk zwischen einer Schließstellung und einer Öffnungsstellung schwenkbar ist.

Das Dokument US 2020/0309932 A1 betrifft ein Ultrabreitband-Sensorsystem und -Verfahren, das ein erhöhtes Kontextbewusstsein und mehr Sicherheit bieten kann.

Das Dokument US 2022/063647 A1 beschreibt Radaranlagen für Kraftfahrzeuge und insbesondere eine Radaranlage mit Multifunktionssensorik.

Der Erfindung liegt nun die Aufgabe zugrunde, ein Kraftfahrzeug mit einem Einklemmschutz für elektrische Fensterheber zu entwickeln, der das Auftreten von Einklemmfällen weiter reduziert.

Die erfindungsgemäße Aufgabe wird gelöst durch ein Kraftfahrzeug, ein Verfahren eines Kraftfahrzeugs und ein Kommunikationssystem für ein Kraftfahrzeug gemäß den unabhängigen Patentansprüchen. Bevorzugte Weiterbildungen sind Gegenstand der jeweils rückbezogenen Unteransprüche.

Ein Aspekt der Erfindung betrifft ein Kraftfahrzeug, insbesondere einen PKW mit einem Verbrennungs-, Elektro- oder Hybridmotor. Das Kraftfahrzeug weist einen Aktuator zum automatischen Verstellen einer Fensterscheibe und/oder eines Schiebedachs des Kraftfahrzeugs auf. Bevorzugt ist der Aktuator elektrisch betätigbar. Ein Beispiel für einen Aktuator ist ein zum Fensterheben eingerichteter elektrischer Motor.

Das Kraftfahrzeug weist ebenfalls ein Ultrabreitband-System (englisch: Ultra-wideband - UWB) mit einem UWB-Sendeempfänger sowie mit einer ersten und mit einer zweiten jeweils zum Senden und Empfangen von UWB-Pulsen eingerichteten Antenne auf. Ebenfalls bevorzugt weist das UWB-System einen zweiten UWB-Sendeempfänger auf. Bei der Verwendung von zwei UWB-Sendeempfängern kann vorteilhaft jede der beiden Antennen mit einem eigenen Sendeempfänger ausgestattet und angesteuert werden. In vorteilhafter Weise erlaubt dies die Einteilung des UWB-Systems in funktionelle UWB-Subsysteme jeweils aufweisend einen der Sendeempfänger und eine der Antennen.

Das UWB-System, insbesondere der UWB-Sendeempfänger, ist insbesondere zum Senden und Empfangen von Signalen in sehr großen Frequenzbereichen, insbesondere in einem Frequenzbereich von 3,1 bis 10,6 GHz, bevorzugt in einem Frequenzbereich von 3,5 bis 9 GHz, besonders bevorzugt in einem Frequenzbereich von 6 GHz bis 8,5 GHz, ausgebildet. Die Sendeleistung der UWB-Pulse ist dabei gering.

Die Bandbreite des UWB-Systems beträgt mindestens 500 MHz und das UWB-System, insbesondere der UWB-Sendeempfänger, ist bevorzugt zum Senden von Signalen mit einer Sendeleistung zwischen 0,5 mW / -41,3 dBm/MHz ausgebildet. Ferner bevorzugt ist das UWB-System, insbesondere der UWB-Sendeempfänger, gemäß dem Standard IEEE 802.15.4 **(insbesondere** den Abschnitten zum UWB PHY Layer) und bevorzugt gemäß dem Standard IEEE 802.15.4z ausgebildet. Durch die Streuung der Signale über derart große Frequenzbereiche stören UWB-Signale andere Funksignale nur minimal. Ferner können mittels UWB-Sendeempfängern zeitlich stark lokalisierte Sendepulse mit geringer Halbwertsbreite (FWHM) übermittelt werden. Dies basiert auf der hohen Frequenzbreite der Sendepulse (ΔE*Δt > const.). Somit sind UWB-Signale für zeitaufgelöste Laufzeitmessungen besonders geeignet und ermöglichen die Erkennung von Objekten mit sehr hoher Ortsauflösung.

Das Kraftfahrzeug weist ferner eine mit dem UWB-System und dem Aktuator verbundene Steuereinrichtung auf. Die Steuereinrichtung ist dazu eingerichtet, ein auf Channel Impulse Response-Messungen (CIR-Messungen) basierendes Verfahren zum Detektieren von Objekten in einem Kollisionsbereich unter Verwendung der ersten Antenne und der zweiten Antenne durchzuführen. Der Kollisionsbereich ist dabei bevorzugt zwischen einer geöffneten und/oder sich schließenden Fensterscheibe (Schiebedach) und der Fahrzeugtür beziehungsweise dem Fahrzeugrahmen angeordnet. Informationen zum Kollisionsbereich sind bevorzugt in einer Speichereinheit des Kraftfahrzeugs oder des UWB-Systems hinterlegt.

Aufgrund der zeitlich stark lokalisierten UWB-Pulse ist es möglich, aus empfangenen UWB-Pulsen mit deren sich aus dem Einfluss der Umgebung auf den gesendeten UWB-Puls ergebender Impulsantwort Informationen zu dem Propagationsweg der UWB-Pulse zu extrahieren. Einflüsse der Umgebung basieren auf physikalischen Phänomenen, die den UWB-Puls von seinem geometrisch vorgeschriebenen Weg ablenken, wie beispielsweise Brechung, Beugung, Reflexion oder Dämpfung. Vorteilhaft ist es daher mit nur zwei Antennen möglich, die Umgebung mittels der CIR-Messungen ortsaufgelöst abzutasten. Durch mehrfaches Versenden von UWB-Pulsen über eine der Antennen und anhand der durch die zweite Antenne empfangenen Impulsantworten können Veränderungen in der Umgebung - beispielsweise ein neu in dem abzutastenden Bereich befindliches Objekt - durch den Vergleich der zeitversetzten Impulsantworten orts- und zeitaufgelöst sichtbar gemacht werden. Auf diese Weise ist die Detektion eines in den Kollisionsbereich eintretenden Objektes verlässlich möglich. Insbesondere ein besonders bevorzugtes konstantes und/oder repetitives Abtasten der Umgebung mittels CIR-Messungen erlaubt dabei eine entsprechende Überwachung des Kollisionsbereichs.

Die CIR-Messungen beinhalten beispielsweise das Versenden von vordefinierten Signalen oder Signalpaketen (sogenannten Telegrammen) zwischen den (zumindest) zwei UWB Antennen. Neben einem direkten Propagationsweg des Signals oder der Signalpakete zwischen den UWB-Antennen gibt es eine Vielzahl weiterer Propagationswege, die beispielsweise Reflektionen im Innenraum des Fahrzeugs einschließen. Basierend auf einer ausreichenden Anzahl und/oder einer vorteilhaften Anordnung der UWB-Antennen im Fahrzeug ermöglichen diese Propagationswege eine Abdeckung von nahezu dem gesamten Fahrzeuginnenraum und Teilen des Fahrzeugaußenraums. Es ist offensichtlich, dass sich die Laufzeiten der Signale oder Signalpakete entlang verschiedener Propagationswege unterscheiden und in Abhängigkeit von der Anwesenheit oder Abwesenheit von Objekten in oder nahe der Propagationswege verändern. Auch die Impulsform (Amplitude, Phase et cetera) der Signale oder Signalpakete wird in Abhängigkeit von der Anwesenheit oder Abwesenheit von Objekten in oder nahe der Propagationswege beeinflusst. Somit lässt sich anhand der Messung von entlang dieser Propagationswege übertragener Signale oder Signalpakete vorteilhaft auf die Anwesenheit oder Abwesenheit von Objekten in oder nahe der Propagationswege, insbesondere in dem vordefinierten Kollisionsbereich, schließen.

Der Kollisionsbereich wird ferner derart ausgewählt, dass zumindest der mögliche Laufweg einer einzelnen, einer Vielzahl von oder aller der Fensterscheiben und/oder des Schiebedachs enthalten ist. In vorteilhafter Weise wird hierdurch eine verlässliche Detektion eines Objekts, wie beispielsweise eines Arms oder eines Kopfes, zwischen einer geöffneten oder sich schließenden Fensterscheibe und der Fahrzeugtür (Fahrzeugrahmen) zur Identifikation eines möglichen Einklemmfalls ermöglicht. Mit anderen Worten kann erfindungsgemäß ein möglicher Einklemmfall in der Fensterscheibe oder dem Schiebedach durch die geeignete Wahl des Kollisionsbereichs vor seinem tatsächlichen Auftreten berührungslos identifiziert werden.

Die Steuereinrichtung ist ebenfalls dazu eingerichtet, ein auf einem Ergebnis des Detektionsverfahrens basierendes Signal zum Unterbrechen einer automatischen Verstellung einer Fensterscheibe und/oder eines Schiebedachs des Kraftfahrzeugs an den Aktuator zu senden. Mit anderen Worten wird auf Basis eines erfindungsgemäß identifizierten Einklemmfalls eine weitere Verstellung der Fensterscheibe und/oder des Schiebedachs durch das von der Steuereinrichtung an den Aktuator gesendete Signal verhindert und bevorzugt eine Umkehrbewegung eingeleitet. Ein Auftreten von Einklemmfällen wird folglich reduziert.

In bevorzugter Ausgestaltung der Erfindung ist vorgesehen, dass die Steuereinrichtung dazu eingerichtet ist, das Detektionsverfahren vor und/oder während einer automatischen Verstellung zum Schließen der Fensterscheibe und/oder des Schiebedachs durch den Aktuator durchzuführen. Hierdurch wird verhindert, dass das erfindungsgemäße Detektionsverfahren in Situationen durchgeführt wird, in welchen es nicht notwendig ist. Ist die Fensterscheibe oder das Schiebedach beispielsweise vollständig geschlossen, besteht keine Gefahr eines Einklemmfalls. Somit können Kosten und unnötiger Verschleiß verringert werden.

Bevorzugt ist die Steuereinrichtung dazu eingerichtet, einen Eingabebefehl eines Nutzers zur automatischen Verstellung zum Schließen der Fensterscheibe und/oder des Schiebedachs durch den Aktuator zu empfangen, anschließend das Detektionsverfahren durchzuführen und ein auf einem Ergebnis des Detektionsverfahrens basierendes Freigabesignal zum Schließen der Fensterscheibe und/oder des Schiebedachs an den Aktuator zu senden. Dies ermöglicht in vorteilhafter Weise, dass der Aktuator erst unter Voraussetzung eines von Objekten freien Kollisionsbereichs zum Schließen der Fensterscheibe und/oder des Schiebedachs angesteuert wird. Folglich wird das Auftreten von möglichen Einklemmfällen weiter reduziert.

In weiter bevorzugter Ausgestaltung der Erfindung ist vorgesehen, dass das UWB-System ferner eine zum Senden und Empfangen von UWB-Pulsen eingerichtete dritte Antenne aufweist. Die Steuereinrichtung ist bevorzugt dazu eingerichtet, das auf CIR-Messungen basierende Verfahren zum Detektieren von Objekten in dem Kollisionsbereich unter Verwendung der ersten, der zweiten und der dritten Antenne durchzuführen. Besonders bevorzugt weist das UWB-System einen dritten Sendeempfänger auf. Es kann insbesondere vorgesehen sein, dass die dritte Antenne und der dritte Sendeempfänger eine funktionelle UWB-Subeinheit bilden. Eine weitere Antenne oder eine weitere funktionelle UWB-Subeinheit erhöht vorteilhaft den aus den Impulsantworten zu extrahierenden Informationsgehalt, beispielsweise anhand der relativen Lageinformation der drei Antennen zueinander. Somit kann die Verlässlichkeit der Identifizierung eines Objekts in dem Kollisionsraum verbessert und ein Auftreten von Einklemmfällen weiter reduziert werden.

In weiter bevorzugter Ausgestaltung der Erfindung ist vorgesehen, dass die Steuereinrichtung ferner dazu eingerichtet ist, ein auf Laufzeitmessungen basierendes Positionierungsverfahren unter Verwendung der drei Antennen durchzuführen. Die Steuereinrichtung ist bevorzugt dazu eingerichtet, mittels der Laufzeitmessungen über die drei Antennen eine Peilung (Triangulation) eines erfassten Objektes und dessen relative Lage zu dem Fahrzeug zu bestimmen. Bei einer solchen Laufzeitmessung (time off light - ToF) wird im Wesentlichen ein UWB-Puls von der Steuereinrichtung über eine Antenne ausgesendet und die Reflexion des UWB-Pulses an einem Objekt durch dieselbe Antenne empfangen. Anhand der Zeit zwischen dem Senden des ersten UWB-Pulses und dem Empfangen des reflektierten UWB-Pulses t₂-t₁ und der Ausbreitungsgeschwindigkeit des UWB-Pulses, das heißt der Lichtgeschwindigkeit, kann die Entfernung d zwischen der Antenne des Moduls und dem Objekt gemäß d=((t₂-t₁)-Δt_{VB}/2c) ermittelt werden. Die Verwendung zeitlich hochaufgelöster UWB-Signale ermöglicht eine Ortsauflösung von deutlich unter einem Meter. Durch die Triangulation kann das Objekt in dreidimensionaler Lage zu dem Fahrzeug bestimmt werden.

Außerdem ist die Steuereinrichtung bevorzugt dazu eingerichtet, mittels des auf Laufzeitmessungen basierenden Positionierungsverfahrens eine Geste eines Nutzers im Gestenbereich zu erfassen. Der Gestenbereich befindet sich bevorzugt in einer vordefinierten Entfernung vor einer Fahrzeugtür und Informationen zum Gestenbereich sind bevorzugt in einer Speichereinheit des Fahrzeugs oder des UWB-Systems abgelegt. Die Steuereinrichtung ist besonders bevorzugt dazu eingerichtet, eine mittels des auf Laufzeitmessungen basierenden Positionierungsverfahrens erfasste Geste mit in der Speichereinheit hinterlegten Gesten abzugleichen und die der Geste zugehörige Funktion durchzuführen. Zugehörige Funktionen sind beispielsweise Verriegeln oder Entriegeln des Kraftfahrzeugs sowie Öffnen oder Schließen einer Fensterscheibe, einer Vielzahl von Fensterscheiben, eines Schiebedachs, einer Tankdeckelklappe und/oder einer Heckklappe des Kraftfahrzeugs. Mit anderen Worten sind das UWB-System und die Steuereinrichtung dazu eingerichtet, sowohl das auf CIR-Messungen basierende Detektionsverfahren als auch das auf Laufzeitmessungen basierende Positionierungsverfahren mit denselben Antennen durchzuführen. Das erfindungsgemäße Detektionsverfahren ermöglicht folglich, sowohl eine Abtastung des Kollisionsbereichs zur Verhinderung von Einklemmfällen als auch mittels des auf Laufzeitmessungen basierenden Positionierungsverfahrens den Gestenbereich abzutasten, um eine Gestensteuerung des Fahrzeugs zu ermöglichen. Vorteilhaft werden dasselbe UWB-System beziehungsweise dieselben UWB-Subsysteme für beide beschriebenen Verfahren (Detektion und Positionierung) verwendet, so dass die Anzahl der notwendigen UWB-Antennen beziehungsweise UWB-Subsysteme geringgehalten und Kosten gespart werden können. Grundsätzlich können auch bereits im Kraftfahrzeug vorhandene UWB-Antennen für die Erfindung verwendet werden.

Der Gestenbereich ist bevorzugt im Außenraum des Kraftfahrzeugs definiert und der Kollisionsbereich ist bevorzugt im Innenraum und im Außenraum des Kraftfahrzeugs definiert. Besonders bevorzugt ragt der Kollisionsbereich ausgehend von der Fensterscheibe oder dem Schiebedach jeweils 10 cm in den Innenraum und den Außenraum des Fahrzeugs, beispielsweise in einer Normalenrichtung der Fensterscheibe oder des Schiebedachs. Mit anderen Worten wird der zu überwachende Kollisionsbereich in einer Richtung orthogonal zu der Laufrichtung der Fensterscheibe und/oder des Schiebedachs erweitert. Dies ermöglicht es vorteilhaft, nicht nur Objekte unmittelbar im Bereich der Laufrichtung der Fensterscheibe oder des Schiebedachs zu detektieren, sondern ebenfalls Objekte, die möglicherweise in einem Zeitpunkt in naher Zukunft in den unmittelbaren Bereich der Laufrichtung der Fensterscheibe oder des Schiebedachs eintreten könnten. Hierdurch können mehr Einklemmfälle identifiziert und das Auftreten von Einklemmfällen weiter reduziert werden.

In weiter bevorzugter Ausgestaltung der Erfindung ist vorgesehen, dass die Steuereinrichtung eingerichtet ist, mittels in dem auf CIR-Messungen basierenden Detektionsverfahren und/oder mittels in einem, bevorzugt dem oben beschriebenen, auf Laufzeitmessungen basierenden Positionierungsverfahren gewonnenen Daten über die Fensterscheibe und/oder über das Schiebedach des Kraftfahrzeugs einen Öffnungsgrad der Fensterscheibe und/oder des Schiebedachs zu bestimmen. Bevorzugt ist die Steuereinrichtung dazu eingerichtet, einen Öffnungsgrad aus den Differenzen zwischen den aus den gewonnenen Daten ermittelten Positionen der Fensterscheibe und/oder des Schiebedachs zu berechnen. Dies stellt eine vorteilhafte Alternative zu der bekannten Ermittlung des Öffnungsgrades einer Fensterscheibe und/oder des Schiebedachs dar.

Zur Vermeidung von Wiederholungen wird auf eine redundante Beschreibung der Vorteile und Merkmale des nachfolgend beschriebenen Verfahrens und des nachfolgend beschriebenen Kommunikationssystems, die sich analog aus der Beschreibung des erfindungsgemäßen Kraftfahrzeugs ergeben, verzichtet.

Ein weiterer Aspekt der Erfindung ist ein Verfahren eines Kraftfahrzeugs, wobei das Kraftfahrzeug einen Aktuator zum automatischen Verstellen einer Fensterscheibe und/oder eines Schiebedachs des Kraftfahrzeugs, ein UWB-System mit einem UWB-Sendeempfänger und einer ersten und einer zweiten jeweils zum Senden und Empfangen von UWB-Pulsen eingerichteten Antenne und eine mit dem UWB-System und dem Aktuator verbundene Steuereinrichtung aufweist. Bevorzugt handelt es sich bei dem Kraftfahrzeug um ein Kraftfahrzeug mit den oben beschriebenen Merkmalen. Das Verfahren umfasst folgende Schritte, nämlich Ansteuern des UWB-Systems zum Durchführen eines auf CIR-Messungen basierenden Verfahrens zum Detektieren von Objekten in einem Kollisionsbereich und Senden eines auf einem Ergebnis des Detektionsverfahrens basierenden Signals zum Unterbrechen einer automatischen Verstellung einer Fensterscheibe und/oder eines Schiebedachs des Kraftfahrzeugs an den Aktuator des Kraftfahrzeugs.

In bevorzugter Ausgestaltung des erfindungsgemäßen Verfahrens ist vorgesehen, dass das Ansteuern des UWB-Systems zum Durchführen des Detektionsverfahrens vor und/oder während einer automatischen Verstellung zur Schließung der Fensterscheibe und/oder des Schiebedachs durch den Aktuator erfolgt.

In weiterer bevorzugter Ausgestaltung der Erfindung ist vorgesehen, dass das UWB-System ferner eine zum Senden und Empfangen von UWB-Pulsen eingerichtete dritte Antenne aufweist und das erfindungsgemäße Verfahren ferner den Schritt aufweist: Durchführen eines auf Laufzeitmessungen basierenden Positionierungsverfahrens unter Verwendung der drei Antennen.

Bevorzugt wird mittels des Positionierungsverfahrens eine Geste eines Nutzers in einem Gestenbereich erfasst.

In weiterer bevorzugter Ausgestaltung des erfindungsgemäßen Verfahrens ist ein zusätzlicher Schritt vorgesehen, nämlich ein Bestimmen eines Öffnungsgrads einer Fensterscheibe und/oder des Schiebedachs des Kraftfahrzeugs mittels in dem auf CIR-Messungen basierenden Detektionsverfahren und/oder mittels in einem/dem auf Laufzeitmessungen basierenden Positionierungsverfahren gewonnenen Daten über die Fensterscheibe und/oder das Schiebedach des Kraftfahrzeugs.

Die einzelnen Verfahrensschritte des erfindungsgemäßen Verfahrens sind ferner bevorzugt als ein oder mehrere Prozesse ausgebildet, die auf einem oder mehreren Prozessoren in einem oder mehreren elektronischen Rechengeräten laufen und beim Ausführen von einem oder mehreren Computerprogrammen erzeugt werden. Die Rechengeräte sind dabei bevorzugt dazu ausgebildet, mit anderen Komponenten, insbesondere einem UWB-System, zusammenzuarbeiten, um die hierin beschriebenen Funktionalitäten zu verwirklichen.

Die Anweisungen der Computerprogramme sind ebenfalls bevorzugt in einem Speicher abgelegt, wie beispielsweise einem RAM-Element. Die Computerprogramme können jedoch auch in einem nicht-flüchtigen Speichermedium, wie beispielsweise einer CD-ROM, einem Flash-Speicher oder dergleichen, abgelegt sein.

Dem Fachmann ist ferner ersichtlich, dass die Funktionalitäten von mehreren Computern (Datenverarbeitungsgeräten) kombiniert oder in einem einzigen Gerät kombiniert sein können oder dass die Funktionalität von einem bestimmten Datenverarbeitungsgerät auf eine Vielzahl von Geräten verteilt vorliegen kann, um die Schritte des erfindungsgemäßen Verfahrens auszuführen, ohne vom erfindungsgemäßen Verfahren abzuweichen.

**Ein weiterer** Aspekt der Erfindung, der nicht Teil der Ansprüche ist, betrifft ein Computerprogramm, umfassend Befehle, die bei der Ausführung des Programms durch einen Computer, wie beispielsweise eine Steuereinrichtung eines Kraftfahrzeugs aufweisend einen Aktuator zum automatischen Verstellen einer Fensterscheibe und/oder eines Schiebedachs des Kraftfahrzeugs, ein UWB-System mit einem UWB-Sendeempfänger und einer ersten und einer zweiten jeweils zum Senden und Empfangen von UWB-Pulsen eingerichteten Antenne, diesen veranlassen, das erfindungsgemäße Verfahren, insbesondere ein auf CIR-Messungen basierendes Verfahren zum Detektieren von Objekten in einem Kollisionsbereich unter Verwendung des UWB-Systems durchzuführen und ein auf einem Ergebnis des Detektionsverfahrens basierenden Signals zum Unterbrechen einer automatischen Verstellung einer Fensterscheibe und/oder eines Schiebedachs des Kraftfahrzeugs an den Aktuator des Kraftfahrzeugs auszugeben.

Ein weiterer Aspekt der Erfindung betrifft ein Kommunikationssystem für ein Kraftfahrzeug. Das Kommunikationssystem umfasst ein UWB-System mit einem UWB-Sendeempfänger und einer ersten, zweiten und dritten jeweils zum Senden und Empfangen von UWB-Pulsen eingerichteten Antenne und eine mit dem UWB-System und dem Aktuator verbundene Steuereinrichtung. Die Steuereinrichtung ist dazu eingerichtet, ein auf CIR-Messungen basierendes Verfahren zum Detektieren von Objekten in einem Kollisionsbereich unter Verwendung der ersten Antenne und der zweiten Antenne durchzuführen und ein auf einem Ergebnis des Detektionsverfahrens basierendes Signal zum Unterbrechen einer automatischen Verstellung einer Fensterscheibe und/oder eines Schiebedachs des Kraftfahrzeugs an einen Aktuator zum automatischen Verstellen einer Fensterscheibe und/oder eines Schiebedachs des Kraftfahrzeugs zu senden. Bevorzugt handelt es sich bei dem Kraftfahrzeug um ein Kraftfahrzeug mit den oben beschriebenen Merkmalen.

In weiterer bevorzugter Ausgestaltung der Erfindung ist vorgesehen, dass eines der UWB-Systeme in einem mobilen Endgerät oder einem Fahrzeugschlüssel angeordnet ist. Beispielsweise sind die erste und die zweite Antenne des UWB-Systems in dem Kraftfahrzeug und die dritte Antenne in dem mobilen Endgerät oder dem Fahrzeugschlüssel angeordnet. Dies ermöglicht eine vorteilhafte Fahrzeugkommunikation mit einem Nutzer über dessen mobiles Endgerät oder dessen Fahrzeugschlüssel. Bevorzugt ist die Steuereinrichtung in dem Kraftfahrzeug angeordnet. Besonders bevorzugt ist die Steuereinrichtung dazu eingerichtet, mittels des UWB-Systems Informationen über die Lage, beispielsweise die relative Lage, des mobilen Endgeräts und/oder des Fahrzeugschlüssels zu dem Kraftfahrzeug zu gewinnen. Beispielsweise können Lageinformationsdaten mittels UWB-Funksignalen von dem mobilen Endgerät oder dem Fahrzeugschlüssel gesendet werden oder die Steuereinrichtung ermittelt die Lage des mobilen Endgeräts oder des Fahrzeugschlüssels mittels CIR-Messungen und/oder mittels des auf Laufzeitmessungen basierenden Positionierungsverfahrens unter Verwendung des UWB-Systems. Vorteilhaft kann das UWB-System des mobilen Endgeräts oder des Fahrzeugschlüssels als weitere Antenne beziehungsweise als weitere funktionelle UWB-Subeinheit den zu extrahierenden Informationsgehalt der Impulsantworten erhöhen, beispielsweise anhand von relativen Lageinformation der drei Antennen zueinander. Somit kann die Verlässlichkeit der Identifizierung eines Objekts in dem Kollisionsraum verbessert und ein Auftreten von Einklemmfällen weiter reduziert werden, während die Anzahl der in dem Kraftfahrzeug eingebauten UWB-Systeme beziehungsweise UWB-Subsysteme geringgehalten werden können.

Bevorzugt ist das in dem mobilen Endgerät oder in dem Fahrzeugschlüssel angeordnete UWB-System ferner eingerichtet, Funksignale zur Authentifizierung eines Nutzers an eines oder alle der übrigen UWB-Systeme zu senden. Ebenfalls bevorzugt ist die Steuereinrichtung dazu eingerichtet, das auf dem Ergebnis des Positionierungsverfahrens basierende Signal basierend auf den empfangenen Funksignalen zur Authentifizierung des Nutzers zu senden. Eine Authentifizierung des Nutzers ermöglicht es, verschiedene Fahrzeugfunktionieren wie beispielsweise die Gestensteuerung oder eine Entriegelung eines Zugangssystem zum Kraftfahrzeug für nicht authentifizierte Nutzer zu sperren. Insofern kann verhindert werden, dass sich nicht autorisierte Nutzer Zugang zum Fahrzeug verschaffen können.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines erfindungsgemäßen Kraftfahrzeugs gemäß einer Ausführungsform und
- Figur 2: eine schematische Darstellung eines erfindungsgemäßen Verfahrens gemäß einer Ausführungsform.

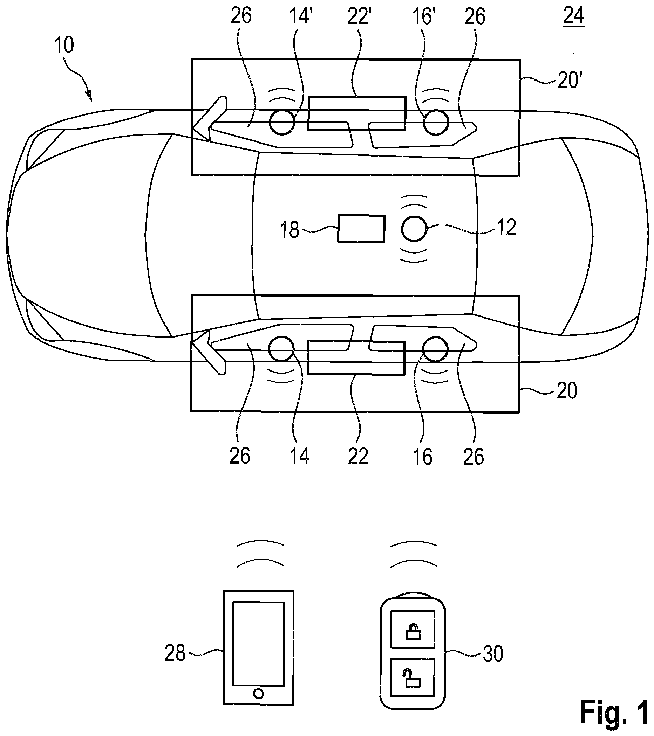

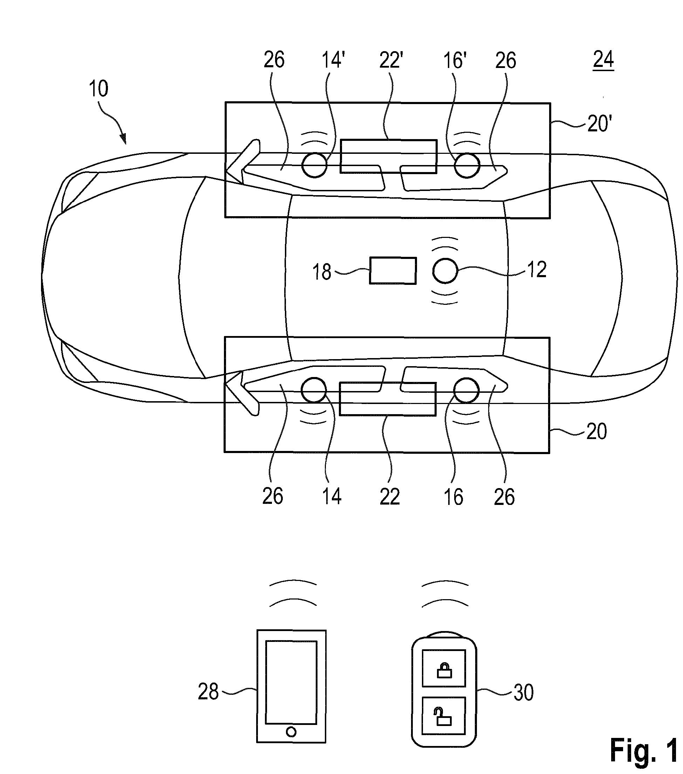

Figur 1 zeigt eine schematische Darstellung eines beispielhaften Kraftfahrzeugs 10, insbesondere eines Kraftfahrzeugs mit einem Verbrennungs-, Elektro- oder Hybridmotor. Das Kraftfahrzeug 10 umfasst einen Aktuator (nicht dargestellt) zum automatischen Verstellen zumindest einer Fensterscheibe 26 des Kraftfahrzeugs 10. Der Einfachheit halber wird nachfolgend nur ein Aktuator zur Bedienung der in Figur 1 dargestellten vier Fensterscheiben 26 beschrieben. Selbstverständlich können auch ein Aktuator pro Fensterscheibe 26 und ein Aktuator für ein Schiebedach des Kraftfahrzeugs 10 vorgesehen sein.

Das Kraftfahrzeug 10 umfasst ferner ein UWB-System 12, 14, 14', 16, 16' mit einer ersten, zweiten und dritten jeweils zum Senden und Empfangen von UWB-Pulsen eingerichteten Antenne 12, 14, 16 und drei jeweils einer der drei Antennen 12, 14, 16 zugeordneten Sendeempfängern (nicht dargestellt). In Figur 1 sind exemplarisch noch eine vierte und eine fünfte zum Senden und Empfangen von UWB-Pulsen eingerichtete Antenne 14', 16' dargestellt. Die Funktionsweise der vierten und fünften Antenne 14', 16' ist analog zu derer der zweiten und dritten Antenne 14, 16. Es soll lediglich exemplarisch gezeigt werden, dass die vorliegende Erfindung nicht auf eine Fahrzeugseite des Kraftfahrzeugs 10 beschränkt ist. Daher wird auf zusätzliche Ausführungen zu der vierten und fünften Antenne 14', 16' verzichtet.

Die erste Antenne 12 ist beispielhaft im Dachhimmel angeordnet. Die zweite und dritte Antenne 14, 16 sind jeweils unter einer beweglichen Fensterscheibe 26 in der vorderen und in der hinteren linkseitigen Fahrzeugtür des Kraftfahrzeugs 10 angeordnet. Die drei Antennen 12, 14, 16 sind mit einer mit dem (zumindest einen) Aktuator verbundenen Steuereinrichtung 18 verbunden. Exemplarisch ist die Steuereinrichtung 18 im Dachhimmel des Kraftfahrzeugs 10 in der Nähe der ersten Antenne 12 angeordnet. Die relative Lage der drei Antennen 12, 14, 16 ist in einer Speichereinheit (nicht dargestellt) der Steuereinrichtung 18 hinterlegt. In der Speichereinheit sind zusätzlich Informationen bezüglich eines Kollisionsbereichs 20, 20' und eines Gestenbereichs 22, 22' hinterlegt.

Unter der Kontrolle der Steuereinrichtung 18 ist das UWB-System 12, 14, 16 dazu ausgebildet, ein auf Channel Impulse Response-Messungen (CIR-Messungen) basierendes Verfahren zum Detektieren von Objekten in dem Kollisionsbereich 20, 20' unter Verwendung der ersten, zweiten und dritten Antenne 12, 14, 16 durchzuführen. Hierzu sendet das UWB-System 12, 14, 16 unter Kontrolle der Steuereinrichtung 18 einen zeitlich stark lokalisierten UWB-Puls über beispielsweise die erste Antenne 12 aus. Der UWB-Puls wird durch die Umgebung von seinem geometrisch vorgeschriebenen Weg abgelenkt. Abhängig von dem jeweiligen Einfluss der Umgebung auf den UWB-Puls gelangen zeitlich verzögerte Teile des von der ersten Antenne 12 ausgesendeten UWB-Pulses zu der zweiten und dritten Antenne 14, 16. Der so zeitlich aufgelöst empfangene UWB-Puls enthält als von der Umgebung abhängige Impulsantwort Informationen zu den Propagationswegen des UWB-Pulses, die sich mittels der Steuereinrichtung 18 extrahieren lassen. Mit anderen Worten ist es auf diese Weise mittels CIR-Messungen möglich, die Umgebung abzutasten und Veränderungen in der Umgebung ortsaufgelöst wahrzunehmen. Durch mehrfaches Versenden von UWB-Pulsen über eine der Antennen 12, 14, 16 und der durch die jeweils anderen Antennen 12, 14, 16 empfangenen Impulsantworten werden Veränderungen in der Umgebung durch den Vergleich der zeitversetzten Impulsantworten orts- und zeitaufgelöst sichtbar gemacht. Erfindungsgemäß wird dies ausgenutzt, um den Kollisionsbereich 20, 20' abzutasten.

Der Kollisionsbereich 20, 20' ist so gewählt, dass dieser einen dreidimensionalen Raum um die beweglichen Fensterscheiben 26 des Kraftfahrzeugs 10 bildet, der entlang der Laufrichtung der jeweiligen Fensterscheibe 26 von der jeweiligen Fensterscheibe 26 geschnitten ist und jeweils 10 cm von der jeweiligen Fensterscheibe 26 in den Außenraum 24 und in den Innenraum des Kraftfahrzeugs hineinragt. Im Falle eines Schließvorgangs eines der Fensterscheiben 26 des Kraftfahrzeugs 10 führt die Steuereinrichtung 18 unter Verwendung des UWB-Systems 12, 14, 16 solange eine Überwachung des Kollisionsbereichs 20, 20' durch, bis der Schließvorgang beendet ist oder unterbrochen wurde. Auf diese Weise werden potenzielle Einklemmfälle in dem Kollisionsbereich identifiziert. Da ein Einklemmfall grundsätzlich nur auftreten kann, wenn eine Fensterscheibe 26 geschlossen wird, erfolgt das auf CIR-Messungen basierende Detektionsverfahren nur während oder vor dem Schließvorgang der Fensterscheibe 26.

Wird ein derartiger Einklemmfall durch die Steuereinrichtung 18 identifiziert, sendet die Steuereinrichtung 18 ein Signal zum Unterbrechen der automatischen Verstellung der sich schließenden Fensterscheibe 26 des Kraftfahrzeugs 10 an den Aktuator. Hierzu ist die Steuereinrichtung 18 eingerichtet und mit dem Aktuator entsprechend verbunden. Im Ergebnis kann der identifizierte Einklemmfall verhindert werden, ohne dass eine Berührung des Objekts mit der Fensterscheibe 26 zur Erzeugung einer Gegenkraft stattfinden muss. Insofern können bereits potentielle Einklemmfälle vor ihrem Auftreten verhindert werden.

Die Steuereinrichtung 18 und das UWB-System 12, 14, 16 sind ferner dazu eingerichtet, ein auf Laufzeitmessungen basierendes Positionierungsverfahren unter Verwendung der drei Antennen 12, 14, 16 durchzuführen. Hierdurch kann eine Geste eines Nutzer zur Steuerung von Fahrzeugfunktionen, die in dem Gestenbereich 22, 22' durchgeführt wird, durch die Steuereinrichtung 18 erfasst werden. Hierzu werden unter Verwendung der drei Antennen 12, 14, 16 UWB-Pulse ausgesendet und eine Reflexion des Objekts zum Durchführen der Geste, beispielsweise einer Hand des Nutzers, jeweils durch dieselbe Antenne 12, 14, 16 wieder empfangen, um einen Abstand zwischen der jeweiligen Antenne 12, 14, 16 und dem Objekt zu bestimmen. Die Positionsbestimmung des Objekts erfolgt dann mittels Triangulation.

Nach einem übereinstimmenden Abgleich der erfassten Geste mit in der Speichereinheit 18 hinterlegten Gesten werden den Gesten entsprechende Fahrzeugfunktionen ausgeführt. Beispielsweise kann der Nutzer des Kraftfahrzeugs 10 über eine Geste eine Türentriegelung des Kraftfahrzeugs 10 bewirken und über eine andere Geste eine oder alle der Fensterscheiben 26 öffnen oder schließen. Die Steuereinrichtung 18 ist vorteilhaft dazu eingerichtet, zwischen dem Kollisionsbereich 20, 20' und dem Gestenbereich 22, 22' zu unterscheiden und somit unter Verwendung derselben Antennen 12, 14, 16 zwei unterschiedliche Funktionen, nämlich einen Einklemmschutz und eine Gestensteuerung, für das Kraftfahrzeug 10 zu übernehmen.

Darüber hinaus besitzt das erfindungsgemäße Kraftfahrzeug 10 eine weitere Funktion, nämlich eine Authentifizierung des Nutzers, die mittels des UWB-Systems 12, 14, 16 unter Kontrolle der Steuereinrichtung 18 und eines UWB-Systems eines mobilen Endgeräts 28 oder eines Fahrzeugschlüssels 30 erfolgt. Mittels UWB-Pulsen werden Authentifizierungsdaten über das UWB-System 12, 14, 16 des Kraftfahrzeugs 10 an die Steuereinrichtung 18 gesendet und mit in der Speichereinheit hinterlegten Authentifizierungsdaten verglichen. Erst nach übereinstimmendem Abgleich schaltet die Steuereinrichtung 18 die Gestenerfassung oder -steuerung frei. Damit können die Antennen 12, 14, 16 auch für eine dritte Funktion genutzt werden, nämlich einer Verhinderung, dass sich nicht autorisierte Nutzer Zugang zum Fahrzeug beschaffen können.

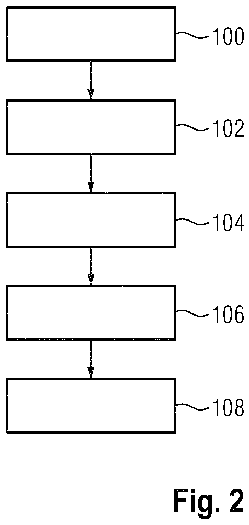

Figur 2 zeigt eine schematische Darstellung eines erfindungsgemäßen Verfahrens eines Kraftfahrzeugs 10 gemäß einer beispielhaften Ausführungsform. In einem ersten Verfahrensschritt 100 wird ein auf Laufzeitmessungen basierendes Positionierungsverfahren unter Verwendung der drei Antennen 12, 14, 16 durchgeführt und mittels des Positionierungsverfahrens eine Geste eines Nutzers in einem Gestenbereich 22, 22' erfasst. Exemplarisch wird eine von dem Nutzer ausgeführte Geste zum Schließen einer Fensterscheibe 26 durch Abgleich mit in einer Speichereinheit hinterlegten Gesten ermittelt.

In einem zweiten Schritt 102 des Verfahrens des Kraftfahrzeugs 10 werden von dem Kraftfahrzeug 10 über das UWB-System 12, 14, 16 Funksignale zur Authentifizierung eines Nutzers von einem UWB-System eines mobilen Endgeräts 28 oder eines Fahrzeugschlüssels 30 empfangen und eine Authentifizierung des Nutzers mittels Abgleich in einer Speichereinheit hinterlegten Authentifizierungsdaten durchgeführt.

In einem dritten Verfahrensschritt 104 des Verfahrens des Kraftfahrzeugs 10 wird nach erfolgreicher Authentifizierung des Nutzers ein Signal zum Schließen des Fensters 26 an einen Aktuator zum automatischen Verstellen des Fensters 26 gesendet.

In einem vierten Schritt 106 wird ein auf CIR-Messungen basierendes Verfahren zum Detektieren von Objekten in einem Kollisionsbereich 20, 20' unter Verwendung der ersten, zweiten und dritten Antenne 12, 14, 16 durchgeführt. Bevorzugt ist der Kollisionsbereich 20, 20' in der Speichereinheit hinterlegt.

In dieser gezeigten beispielhaften Ausführungsform des Verfahrens eines Kraftfahrzeugs 10 wird in einem fünften Schritt 108 ein auf einem Ergebnis des Detektionsverfahrens basierendes Signal zum Unterbrechen einer automatischen Verstellung der Fensterscheibe 26 an den Aktuator zum automatischen Verstellen der Fensterscheibe 26 gesendet. Insbesondere umfasst das Ergebnis des Detektionsverfahrens einen identifizierten Einklemmfall, der durch das Senden des Signals an den Aktuator verhindert werden soll. Bevorzugt umfasst das Unterbrechungssignal zusätzlich ein Signal zur Bewegungsumkehr des Aktuators.

### Bezugszeichenliste

- 10: Kraftfahrzeug
- 12: erste Antenne
- 14: zweite Antenne
- 14': vierte Antenne
- 16: dritte Antenne
- 16': fünfte Antenne
- 18: Steuereinrichtung
- 20, 20': Kollisionsbereich
- 22, 22': Gestenbereich
- 24: Außenraum des Kraftfahrzeugs
- 26: Fensterscheibe
- 28: mobiles Endgerät
- 30: Fahrzeugschlüssel
- 100: erster Verfahrensschritt
- 102: zweiter Verfahrensschritt
- 104: dritter Verfahrensschritt
- 106: vierter Verfahrensschritt
- 108: fünfter Verfahrensschritt

## Patentansprüche

1. Kraftfahrzeug (10), aufweisend:
einen Aktuator zum automatischen Verstellen einer Fensterscheibe (26) und/oder eines Schiebedachs des Kraftfahrzeugs (10),
ein UWB-System (12, 14, 16) mit einem UWB-Sendeempfänger, einer ersten und einer zweiten jeweils zum Senden und Empfangen von UWB-Pulsen eingerichteten Antenne (12, 14),
eine mit dem UWB-System (12, 14, 16) und dem Aktuator verbundene Steuereinrichtung (18), die dazu eingerichtet ist:
ein auf Channel Impulse Response-Messungen basierendes Verfahren zum Detektieren von Objekten in einem Kollisionsbereich (20, 20') unter Verwendung der ersten Antenne (12) und der zweiten Antenne (14) durchzuführen, wobei der Kollisionsbereich (20, 20') zumindest einen möglichen Laufweg der Fensterscheibe (26) und/oder des Schiebedachs des Kraftfahrzeugs (10) enthält, und
ein auf einem Ergebnis des Detektionsverfahrens basierendes Signal zum Unterbrechen einer automatischen Verstellung einer Fensterscheibe (26) und/oder eines Schiebedachs des Kraftfahrzeugs (10) an den Aktuator zu senden.

2. Kraftfahrzeug (10) nach Anspruch 1, **dadurch gekennzeichnet, dass** die Steuereinrichtung (18) dazu eingerichtet ist, das Detektionsverfahren vor und/oder während einer automatischen Verstellung zur Schließung der Fensterscheibe (26) und/oder des Schiebedachs durch den Aktuator durchzuführen.

3. Kraftfahrzeug (10) nach einem der vorangehenden Ansprüche, **dadurch gekennzeichnet, dass** das UWB-System (12, 14, 16) eine zum Senden und Empfangen von UWB-Pulsen eingerichtete dritte Antenne (16) aufweist.

4. Kraftfahrzeug (10) nach Anspruch 3, **dadurch gekennzeichnet, dass** die Steuereinrichtung (18) ferner dazu eingerichtet ist, ein auf Laufzeitmessungen basierendes Positionierungsverfahren unter Verwendung der drei Antennen (12, 14, 16) durchzuführen.

5. Kraftfahrzeug (10) nach Anspruch 4, **dadurch gekennzeichnet, dass** die Steuereinrichtung (18) eingerichtet ist, mittels des auf Laufzeitmessungen basierenden Positionierungsverfahrens eine Geste eines Nutzers in einem Gestenbereich (22, 22') zu erfassen.

6. Kraftfahrzeug (10) nach Anspruch 5, **dadurch gekennzeichnet, dass** der Gestenbereich (22, 22') im Außenraum (24) des Kraftfahrzeugs (10) vorgesehen ist, der Kollisionsbereich (20, 20') im Innenraum und im Außenraum (24) des Kraftfahrzeugs (10) vorgesehen ist und/oder Informationen zum Gestenbereich (22, 22') und zum Kollisionsbereich (20, 20') in einer Speichereinheit des Fahrzeugs hinterlegt sind.

7. Kraftfahrzeug (10) nach einem der vorherigen Ansprüche, **dadurch gekennzeichnet, dass** die Steuereinrichtung (18) eingerichtet ist, mittels in dem auf Channel Impulse Response-Messungen basierenden Detektionsverfahren und/oder mittels in einem/dem auf Laufzeitmessungen basierenden Positionierungsverfahren gewonnenen Daten über die Fensterscheibe (26) und/oder das Schiebedach des Kraftfahrzeugs (10) einen Öffnungsgrad der Fensterscheibe (26) und/oder des Schiebedachs zu bestimmen.

8. Verfahren eines Kraftfahrzeugs (10), wobei das Kraftfahrzeug (10) einen Aktuator zum automatischen Verstellen einer Fensterscheibe (26) und/oder eines Schiebedachs des Kraftfahrzeugs (10), ein UWB-System (12, 14, 16) mit einem UWB-Sendeempfänger und einer ersten und einer zweiten jeweils zum Senden und Empfangen von UWB-Pulsen eingerichteten Antenne (12, 14) und eine mit dem UWB-System (12, 14, 16) und dem Aktuator verbundene Steuereinrichtung (18) aufweist und das Verfahren folgende Schritte umfasst:
Ansteuern des UWB-Systems (12, 14, 16) zum Durchführen eines auf Channel Impulse Response-Messungen basierenden Verfahrens zum Detektieren von Objekten in einem Kollisionsbereich (20, 20'), wobei der Kollisionsbereich (20, 20') zumindest einen möglichen Laufweg der Fensterscheibe (26) und/oder des Schiebedachs des Kraftfahrzeugs (10) enthält, und
Senden eines auf einem Ergebnis des Detektionsverfahrens basierenden Signals zum Unterbrechen einer automatischen Verstellung einer Fensterscheibe (26) und/oder eines Schiebedachs des Kraftfahrzeugs (10) an den Aktuator des Kraftfahrzeugs (10).

9. Verfahren nach Anspruch 8, wobei das Ansteuern des UWB-Systems (12, 14, 16) zum Durchführen des Detektionsverfahrens vor und/oder während einer automatischen Verstellung zur Schließung der Fensterscheibe (26) und/oder des Schiebedachs durch den Aktuator erfolgt.

10. Verfahren nach Anspruch 8 oder 9, wobei das UWB-System (12, 14, 16) ferner eine zum Senden und Empfangen von UWB-Pulsen eingerichtete dritte Antenne (16) aufweist und das Verfahren ferner den Schritt aufweist: Durchführen eines auf Laufzeitmessungen basierenden Positionierungsverfahrens unter Verwendung der drei Antennen (12, 14, 16).

11. Verfahren nach Anspruch 10, wobei mittels des Positionierungsverfahrens eine Geste eines Nutzers in einem Gestenbereich (22, 22') erfasst wird.

12. Verfahren nach einem der Ansprüche 8 bis 11, ferner aufweisend den Verfahrensschritt: Bestimmen eines Öffnungsgrads einer Fensterscheibe (26) und/oder des Schiebedachs des Kraftfahrzeugs (10) mittels in dem auf Channel Impulse Response-Messungen basierenden Detektionsverfahren und/oder mittels in einem/dem auf Laufzeitmessungen basierenden Positionierungsverfahren gewonnenen Daten über die Fensterscheibe (26) und/oder das Schiebedach des Kraftfahrzeugs (10).

13. Kommunikationssystem für ein Kraftfahrzeug (10), umfassend :
ein UWB-System (12, 14, 16) mit einem UWB-Sendeempfänger und einer ersten, zweiten und dritten jeweils zum Senden und Empfangen von UWB-Pulsen eingerichteten Antenne (12, 14, 16) und
eine mit dem UWB-System (12, 14, 16) und einem Aktuator verbundene Steuereinrichtung (18), die dazu eingerichtet ist:
ein auf Channel Impulse Response-Messungen basierendes Verfahren zum Detektieren von Objekten in einem Kollisionsbereich (20, 20') unter Verwendung der ersten Antenne (12) und der zweiten Antenne (14) durchzuführen, wobei der Kollisionsbereich (20, 20') zumindest einen möglichen Laufweg einer Fensterscheibe (26) und/oder eines Schiebedachs des Kraftfahrzeugs (10) enthält, und
ein auf einem Ergebnis des Detektionsverfahrens basierendes Signal zum Unterbrechen einer automatischen Verstellung der Fensterscheibe (26) und/oder des Schiebedachs des Kraftfahrzeugs (10) an **den** Aktuator zum automatischen Verstellen der Fensterscheibe (26) und/oder des Schiebedachs des Kraftfahrzeugs (10) zu senden.

14. Kommunikationssystem nach Anspruch 13, **dadurch gekennzeichnet, dass** eines der UWB-Systeme in einem mobilen Endgerät (28) oder einem Fahrzeugschlüssel (30) angeordnet ist.

15. Kommunikationssystem nach Anspruch 14, **dadurch gekennzeichnet, dass** das in dem mobilen Endgerät (28) oder dem Fahrzeugschlüssel (30) angeordnete UWB-System eingerichtet ist, Funksignale zur Authentifizierung eines Nutzers an eines oder alle der übrigen UWB-Systeme (12, 14, 16) zu senden, und dass die Steuereinrichtung (18) eingerichtet ist, das auf dem Ergebnis des Positionierungsverfahrens basierende Signal basierend auf den empfangenen Funksignalen zur Authentifizierung des Nutzers zu senden.

## Claims

1. Motor vehicle (10) comprising:
an actuator for automatically adjusting a window pane (26) and/or a sunroof of the motor vehicle (10),
a UWB system (12, 14, 16) comprising a UWB transceiver, a first and a second antenna (12, 14) each designed to transmit and receive UWB pulses,
a control device (18) connected to the UWB system (12, 14, 16) and to the actuator, which control device is designed:
to carry out a method based on channel impulse response measurements, which method is for detecting objects in a collision region (20, 20') using the first antenna (12) and the second antenna (14), wherein the collision region (20, 20') includes at least one possible path of the window pane (26) and/or the sunroof of the motor vehicle (10), and to send a signal based on a result of the detection method to the actuator in order to interrupt an automatic adjustment of a window pane (26) and/or a sunroof of the motor vehicle (10).

2. Motor vehicle (10) according to claim 1, **characterized in that** the control device (18) is designed to carry out the detection method before and/or during an automatic adjustment by the actuator to close the window pane (26) and/or the sunroof.

3. Motor vehicle (10) according to any of the preceding claims, **characterized in that** the UWB system (12, 14, 16) comprises a third antenna (16) designed to send and receive UWB pulses.

4. Motor vehicle (10) according to claim 3, **characterized in that** the control device (18) is further designed to carry out a positioning method based on time-of-flight measurements using the three antennas (12, 14, 16).

5. Motor vehicle (10) according to claim 4, **characterized in that** the control device (18) is designed to detect a gesture of a user, which gesture is in a gesture region (22, 22'), by means of the positioning method based on time-of-flight measurements.

6. Motor vehicle (10) according to claim 5, **characterized in that** the gesture region (22, 22') is provided in an exterior (24) of the motor vehicle (10), the collision region (20, 20') is provided in an interior and in the exterior (24) of the motor vehicle (10) and/or information about the gesture region (22, 22') and about the collision region (20, 20') is stored in a storage unit of the vehicle.

7. Motor vehicle (10) according to any of the preceding claims, **characterized in that** the control device (18) is designed to determine a degree of opening of the window pane (26) and/or of the sunroof by means of data about the window pane (26) and/or the sunroof of the motor vehicle (10), which data are obtained in the detection method based on channel impulse response messages and/or obtained in a/the positioning method based on time-of-flight measurements.

8. Method of a motor vehicle (10), wherein the motor vehicle (10) comprises an actuator for automatically adjusting a window pane (26) and/or a sunroof of the motor vehicle (10), a UWB system (12, 14, 16) having a UWB transceiver and a first and a second antenna (12, 14) each designed to transmit and receive UWB pulses, and a control device (18) connected to the UWB system (12, 14, 16) and the actuator, and the method comprises the following steps:
controlling the UWB system (12, 14, 16) to carry out a method based on channel impulse response measurements for detecting objects in a collision region (20, 20'), wherein the collision region (20, 20') includes at least one possible path of the window pane (26) and/or of the sunroof of the motor vehicle (10), and
transmitting a signal based on a result of the detection method to the actuator of the motor vehicle (10) in order to interrupt an automatic adjustment of a window pane (26) and/or a sunroof of the motor vehicle (10).

9. Method according to claim 8, wherein the UWB system (12, 14, 16) is controlled to carry out the detection method before and/or during an automatic adjustment by the actuator to close the window pane (26) and/or the sunroof.

10. Method according to claim 8 or 9, wherein the UWB system (12, 14, 16) further comprises a third antenna (16) designed to send and receive UWB pulses and the method further comprises the step of: carrying out a positioning method based on time-of-flight measurements using the three antennas (12, 14, 16).

11. Method according to claim 10, wherein a gesture of a user is detected in a gesture region (22, 22') by means of the positioning method.

12. Method according to any of claims 8 to 11, further comprising the method step of:
determining a degree of opening of a window pane (26) and/or the sunroof of the motor vehicle (10) by means of data about the window pane (26) and/or the sunroof of the motor vehicle (10), which data are obtained in the detection method based on channel impulse response measurements and/or obtained in a/the positioning method based on time-of-flight measurements.

13. Communication system for a motor vehicle (10), comprising:
a UWB system (12, 14, 16) having a UWB transceiver and a first, second and third antenna (12, 14, 16) each designed to transmit and receive UWB pulses and
a control device (18) connected to the UWB system (12, 14, 16) and to an actuator, which control device is designed:
to carry out a method based on channel impulse response measurements, which method is for detecting objects in a collision region (20, 20') using the first antenna (12) and the second antenna (14), wherein the collision region (20, 20') includes at least one possible path of a window pane (26) and/or of a sunroof of the motor vehicle (10), and
to send a signal based on a result of the detection method in order to interrupt an automatic adjustment of the window pane (26) and/or of the sunroof of the motor vehicle (10) to the actuator to automatically adjust the window pane (26) and/or the sunroof of the motor vehicle (10).

14. Communication system according to claim 13, **characterized in that** one of the UWB systems is arranged in a mobile terminal (28) or in a vehicle key (30).

15. Communication system according to claim 14, **characterized in that** the UWB system arranged in the mobile terminal (28) or in the vehicle key (30) is designed to send radio signals for authenticating a user to one or all of the other UWB systems (12, 14, 16), and **in that** the control device (18) is designed to send the signal based on the result of the positioning method based on the received radio signals for authenticating the user.

## Revendications

1. Véhicule automobile (10), présentant :
un actionneur pour le déplacement automatique d'une vitre (26) et/ou d'un toit ouvrant du véhicule automobile (10),
un système ULB (12, 14, 16) comportant un émetteur-récepteur ULB, une première et une deuxième antenne (12, 14) configurées respectivement pour émettre et recevoir des impulsions ULB,
un dispositif de commande (18) connecté au système ULB (12, 14, 16) et à l'actionneur et configuré pour :
exécuter un procédé basé sur des mesures de réponse impulsionnelle de canal pour la détection d'objets dans une zone de collision (20, 20') à l'aide de la première antenne (12) et de la deuxième antenne (14), dans lequel la zone de collision (20, 20') contient au moins une trajectoire possible de la vitre (26) et/ou du toit ouvrant du véhicule automobile (10), et envoyer à l'actionneur un signal basé sur un résultat du procédé de détection pour l'interruption d'un déplacement automatique d'une vitre (26) et/ou d'un toit ouvrant du véhicule automobile (10).

2. Véhicule automobile (10) selon la revendication 1, **caractérisé en ce que** le dispositif de commande (18) est configuré pour exécuter le procédé de détection avant et/ou pendant un déplacement automatique pour la fermeture de la vitre (26) et/ou du toit ouvrant par l'actionneur.

3. Véhicule automobile (10) selon l'une des revendications précédentes, **caractérisé en ce que** le système ULB (12, 14, 16) présente une troisième antenne (16) configurée pour émettre et recevoir des impulsions ULB.

4. Véhicule automobile (10) selon la revendication 3, **caractérisé en ce que** le dispositif de commande (18) est en outre configuré pour exécuter un procédé de positionnement basé sur des mesures de temps de propagation à l'aide des trois antennes (12, 14, 16).

5. Véhicule automobile (10) selon la revendication 4, **caractérisé en ce que** le dispositif de commande (18) est configuré pour détecter un geste d'un utilisateur dans une zone de geste (22, 22') au moyen du procédé de positionnement basé sur des mesures de temps de propagation.

6. Véhicule automobile (10) selon la revendication 5, **caractérisé en ce que** la zone de geste (22, 22') est prévue dans l'espace extérieur (24) du véhicule automobile (10), la zone de collision (20, 20') est prévue dans l'espace intérieur et dans l'espace extérieur (24) du véhicule automobile (10) et/ou des informations concernant la zone de geste (22, 22') et la zone de collision (20, 20') sont enregistrées dans une unité de mémorisation du véhicule.

7. Véhicule automobile (10) selon l'une des revendications précédentes, **caractérisé en ce que** le dispositif de commande (18) est configuré pour déterminer un degré d'ouverture de la vitre (26) et/ou du toit ouvrant du véhicule automobile (10) au moyen de données obtenues dans le procédé de détection basé sur des mesures de réponse impulsionnelle de canal et/ou au moyen de données obtenues dans un ou le procédé de positionnement basé sur des mesures de temps de propagation, lesquelles données concernent la vitre (26) et/ou le toit ouvrant.

8. Procédé d'un véhicule automobile (10), dans lequel le véhicule automobile (10) présente un actionneur pour le déplacement automatique d'une vitre (26) et/ou d'un toit ouvrant du véhicule automobile (10), un système ULB (12, 14, 16) comportant un émetteur-récepteur ULB et une première et une deuxième antenne (12, 14) configurées respectivement pour émettre et recevoir des impulsions ULB et un dispositif de commande (18) connecté au système ULB (12, 14, 16) et à l'actionneur et le procédé comprend les étapes suivantes :
commande du système ULB (12, 14, 16) pour l'exécution d'un procédé basé sur des mesures de réponse impulsionnelle de canal pour la détection d'objets dans une zone de collision (20, 20'), dans lequel la zone de collision (20, 20') contient au moins une trajectoire possible de la vitre (26) et/ou du toit ouvrant du véhicule automobile (10), et
envoi à l'actionneur du véhicule automobile (10) d'un signal basé sur un résultat du procédé de détection pour l'interruption d'un déplacement automatique d'une vitre (26) et/ou d'un toit ouvrant du véhicule automobile (10).

9. Procédé selon la revendication 8, dans lequel la commande du système ULB (12, 14, 16) pour l'exécution du procédé de détection est effectuée avant et/ou pendant un déplacement automatique pour la fermeture de la vitre (26) et/ou du toit ouvrant par l'actionneur.

10. Procédé selon la revendication 8 ou 9, dans lequel le système ULB (12, 14, 16) comprend en outre une troisième antenne (16) configuré pour émettre et recevoir des impulsions ULB et le procédé présente en outre l'étape consistant à : exécuter un procédé de positionnement basé sur des mesures de temps de propagation à l'aide des trois antennes (12, 14, 16).

11. Procédé selon la revendication 10, dans lequel un geste d'un utilisateur est détecté dans une zone de geste (22, 22') au moyen du procédé de positionnement.

12. Procédé selon l'une des revendications 8 à 11, présentant en outre l'étape de procédé consistant à :
déterminer un degré d'ouverture d'une vitre (26) et/ou du toit ouvrant du véhicule automobile (10) au moyen de données obtenues dans le procédé de détection basé sur des mesures de réponse impulsionnelle de canal et/ou au moyen de données obtenues dans un ou le procédé de positionnement basé sur des mesures de temps de propagation, lesquelles données concernent la vitre (26) et/ou le toit ouvrant du véhicule automobile (10).

13. Système de communication pour un véhicule automobile (10), comprenant :
un système ULB (12, 14, 16) comportant un émetteur-récepteur ULB et une première, une deuxième et une troisième antenne (12, 14, 16) respectivement configurées pour émettre et recevoir des impulsions ULB et
un dispositif de commande (18) connecté au système ULB (12, 14, 16) et à un actionneur et configuré pour :
exécuter un procédé basé sur des mesures de réponse impulsionnelle de canal pour la détection d'objets dans une zone de collision (20, 20') à l'aide de la première antenne (12) et de la deuxième antenne (14), dans lequel la zone de collision (20, 20') contient au moins une trajectoire possible d'une vitre (26) et/ou d'un toit ouvrant du véhicule automobile (10), et
envoyer à l'actionneur un signal basé sur un résultat du procédé de détection pour l'interruption d'un déplacement automatique de la vitre (26) et/ou du toit ouvrant du véhicule automobile (10) pour le déplacement automatique de la vitre (26) et/ou du toit ouvrant du véhicule automobile (10).

14. Système de communication selon la revendication 13,
**caractérisé en ce que** l'un des systèmes ULB est disposé dans un terminal mobile (28) ou une clé de véhicule (30).

15. Système de communication selon la revendication 14,
**caractérisé en ce que** le système ULB disposé dans le terminal mobile (28) ou la clé de véhicule (30) est configuré pour envoyer des signaux radio pour l'authentification d'un utilisateur à un autre système ULB ou à tous les autres systèmes ULB (12, 14, 16), et **en ce que** le dispositif de commande (18) est configuré pour envoyer le signal basé sur le résultat du procédé de positionnement sur la base des signaux radio reçus pour l'authentification de l'utilisateur.
